# EUROPEAN PATENT SPECIFICATION

(11) **EP 3 216 550 B1**
(45) Date of publication and mention of the grant of the patent: **10.04.2019**
(21) Application number: 17000154.9
(22) Date of filing: 01.02.2017
(51) Int. Cl.: B23K 9/095, B23K 9/10, B23K 9/32

(54) **ARC WELDING SYSTEM WITH VARIABLE-FREQUENCY AUXILIARY POWER OUTPUT**
LICHTBOGENSCHWEISSVORRICHTUNG MIT ZUSÄTZLICHEM LEISTUNGSAUSGANG MIT VARIABLER FREQUENZ
DISPOSITIF DE SOUDAGE À L'ARC AYANT UNE SORTIE DE PUISSANCE AUXILIAIRE À FRÉQUENCE VARIABLE

(30) Priority: 11.03.2016 US 201615067295
(43) Date of publication of application: 13.09.2017
(73) Proprietor: Lincoln Global, Inc., Santa Fe Springs, CA 90670 (US)
(72) Inventor: Enyedy, Edward A., Eastlake, OH 44095 (US)
(74) Representative: Grosse Schumacher Knauer von Hirschhausen

(56) References cited:
- WO-A1-2007/044135
- US-A1- 2002 047 000
- US-A1- 2004 108 728
- US-A1- 2012 138 587

## Description

### FIELD OF THE INVENTION

The invention is related to an arc welding system according to the preamble of claim 1 (see, for example, US 2002 047 000 A1). The present invention relates to an arc welder powered by a generator and having an auxiliary power output for suppling electrical energy to auxiliary loads, such as lights, power tools, and the like.

### TECHNICAL BACKGROUND

Arc welding machines can be powered by engine-generators, allowing the arc welding machines to be operated independent of a source of utility power. Such arc welding machines can have an auxiliary power outputs (e.g., outlets) that allow other electrical devices to be operated. The frequency of the auxiliary power (e.g., 60 Hz) typically depends on the operating speed (e.g., RPM) of the engine driving the generator. It would be desirable to provide an arc welding system in which the frequency of the auxiliary power output is both user-adjustable and independent of the engine speed.

### DESCRIPTION

In order to optimize arc welding machines with auxiliary power outputs an arc welding system according to the present invention is defined in claim 1. Further embodiments of the invention are subject of the subclaims. The following summary presents a simplified summary in order to provide a basic understanding of some aspects of the systems and methods discussed herein. This summary is not an extensive overview of the systems and methods discussed herein. It is not intended to identify critical elements or to delineate the scope of such systems and methods. Its sole purpose is to present some concepts in a simplified form as a prelude to the more detailed description that is presented later.

Example aspects and embodiments of the present invention are summarized below. It is to be appreciated that the example aspects and/or embodiments may be provided separately or in combination with one another.

In accordance with one aspect, provided is an arc welding system, comprising a welding power supply. The welding power supply includes a switching type power converter. A welding electrode is operatively connected to the switching type power converter to receive electrical energy from the switching type power converter and produce an electric arc from the arc welding system. A variable-frequency auxiliary power supply supplies electrical energy to an auxiliary load through an auxiliary power output of the arc welding system. An engine-generator is operatively connected to the welding power supply and the variable-frequency auxiliary power supply, to supply electrical energy to the welding power supply to produce the electric arc, and to supply further electrical energy to the variable-frequency auxiliary power supply. A controller is operatively connected to the variable-frequency auxiliary power supply and is configured to control an output voltage frequency of the variable-frequency auxiliary power supply according to an auxiliary power supply frequency setting. The output voltage frequency of the variable-frequency auxiliary power supply is independent from an engine speed of the engine-generator.

Further embodiments of the present invention are defined in the dependent claims.

### BRIEF DESCRIPTION OF THE DRAWINGS

FIG. 1 is a schematic diagram of an example arc welding system;
FIG. 2 is a schematic diagram of an example arc welding system;
FIG. 3 is a schematic diagram of an example arc welding system; and
FIG. 4 is a schematic diagram of an example arc welding system.

### DETAILED DESCRIPTION

The present invention relates to arc welders powered by an engine-generator and having one or more variable-frequency auxiliary power outputs for supplying electrical energy to auxiliary loads. The present invention will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following deception, for purposes of explanation, numerous specific details are set forth in order to provide a thorough understanding of the present invention. It may be evident, however, that the present invention can be practiced without these specific details. Additionally, other embodiments of the invention are possible and the invention is capable of being practiced and carried out in ways other than as described. The terminology and phraseology used in describing the invention is employed for the purpose of promoting an understanding of the invention and should not be taken as limiting.

As used herein, the term "welding" refers to an arc welding process. Example arc welding processes include shielded metal arc welding (SMAW) (e.g., stick welding), flux cored arc welding (FCAW), and other welding processes such as gas metal arc welding (GMAW), gas tungsten arc welding (GTAW), and the like.

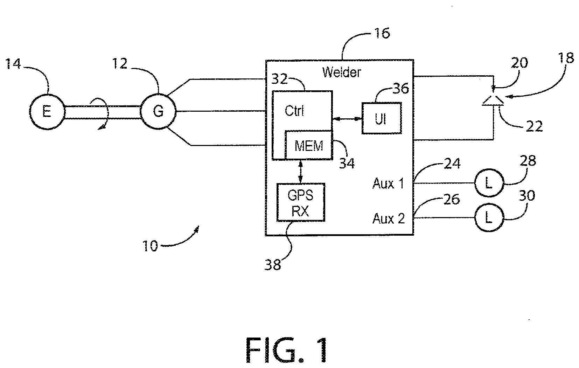

An example arc welding system 10 is shown schematically in Fig 1. The welding system 10 includes a generator 12 driven by an engine 14 thereby forming an engine-generator. Example engines include diesel engines, gasoline engines, LP gas engines, and the like. The generator 12 generates electrical energy for powering a welding power supply 16 (hereinafter "welder"). The generator 12 is shown schematically as being a synchronous 3-phase alternator. However, the generator need not be a synchronous 3-phase alternator. For example, the generator could be a single phase alternator or a DC generator if desired.

The welder 16 includes circuitry for generating a welding waveform during arc welding. A welding Operation is schematically shown in Fig. 1 as an electric arc 18 extending between a welding electrode 20 (consumable or non-consumable) and a workpiece 22.

The welder 16 also includes circuitry for providing AC or DC power to one or more auxiliary power outputs 24, 26 (e.g., Aux1 and Aux2 in Fig.1). The auxiliary power outputs 24, 26 provide electrical power to auxiliary loads 28, 30. Example auxiliary loads that can be powered by the welder 16 include tools, lights, pumps, chargers and the like. In a conventional generator-driven welder, the auxiliary power will be supplied by the generator 12. If the arc welding system is a hybrid powered arc welding system having one or more batteries for supplying electrical energy to the welder, the auxiliary power can also by supplied from the batteries.

The auxiliary power outputs 24, 26 can include appropriate outlets for facilitating connections to the auxiliary loads 28, 30. Example outlets include, for example, NEMA Standard outlets commonly found in North America, CEE outlets commonly found in Europe, and other styles of outlets. The auxiliary power outputs 24, 26 can include multiple styles of outlets to readily accommodate use in different geographical locations around the world, or the welder 16 can include appropriate adapters to convert one style of outlet to another.

In the arc welding system 10 of Fig. 1, the auxiliary power outputs 24, 26 are variable-frequency auxiliary power outputs. The output voltage frequencies of the auxiliary power outputs can be adjusted. The output voltage at the auxiliary power outputs 24, 26 is provided by one or more inverters within the welder 16. The welder 16 includes a controller 32 that is operatively connected to the inverter(s) to control the characteristics (e.g., frequency and voltage level) of the output voltage at the auxiliary power outputs 24, 26. Through known pulse width modulation techniques, the controller 32 can provide different voltage levels and frequencies at the auxiliary power outputs 24, 26. For example, when used in North America, the auxiliary power outputs 24, 26 can be controlled to provide 60 Hz power at a desired voltage level (e.g., 120V, 240V etc.) When used in Europe, the auxiliary power outputs 24, 26 can be controlled to provide 50 Hz power at a desired voltage level (e.g., 220V). Other frequencies and voltages are possible. For example, when used at an airport, the auxiliary power outputs can be controlled to provide 400 Hz power at 120V.

The controller 32 sets the output voltage frequencies of the auxiliary power outputs 24, 26 according to one or more auxiliary power supply frequency settings (e.g., 0 Hz or DC, 50 Hz, 60 Hz, 400 Hz, etc.). The controller 32 also sets the output voltage level according to one or more auxiliary power supply voltage settings (e.g., 100V, 120V, 208V, 220V, 240V, etc.) The controller has an associated memory portion 34 for storing the settings for the auxiliary power outputs. The welder 16 includes a user interface 36 operatively connected to the controller 32 for receiving the frequency and/or voltage settings for the auxiliary power outputs 24, 26 directly from a user of the welding system 10. The user interface 36 can also allow various welding parameters to be set, such as welding voltage and current, a welding waveform, welding wire feed speed, etc.

In certain embodiments, the welder 16 can include a position signal receiver 38 that is configured to receive a position signal and generate current position information based on the position signal. The current position information includes data that identifies the current position of the position signal receiver 38, and thus the welder 16. The position signal receiver 38 is operatively connected to the controller 32 and communicates with the controller to periodically transmit the current position information to the controller. The controller 32 can automatically determine the auxiliary power supply frequency setting and output voltage level based on the current position information provided by the position signal receiver 38. To do this, the controller 32 can be programmed with appropriate default frequency and voltage level settings for different geographic locations around the world. Thus, the welder 16 can automatically determine its current geographical location and set the frequency and/or voltage level of the auxiliary power outputs 24, 26 according to the current geographical location. Such settings can be manually overridden via the user interface 36 if desired. As the welding system 10 is moved from one location to another, the voltage and frequency settings of the auxiliary power outputs 24, 26 can be adjusted, either automatically or manually, to settings appropriate to the current location.

One example of a position signal receiver 38 is a global navigation satellite system (GNSS) receiver. GNSS receivers receive GNSS signal transmissions from satellites in orbit and, based on the time of travel of each of the transmissions, determine the position of the GNSS receiver. GNSS receivers include Global Positioning system (GPS) receivers and receivers for the Galileo and GLONASS systems.

The controller 32 can be an electronic controller and may include a processor. The controller 32 can include one or more of a microprocessor, a microcontroller, a digital signal processor (DSP), an application specific integrated circuit (ASIC), a field-programmable gate array (FPGA), discrete logic circuitry, or the Hke. The controller 32 can include the memory portion 34 (e.g., RAM or ROM) storing program Instructions that cause the controller to provide the functionality ascribed to it herein.

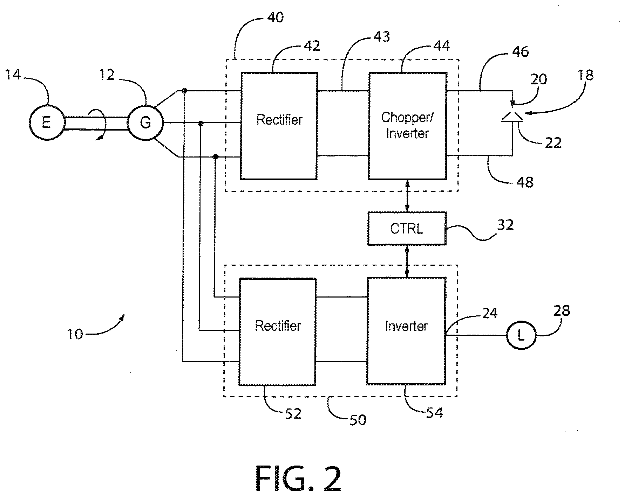

Figure 2 provides another schematic diagram of an example arc welding system 10 with additional details of the welder shown. Armature windings in the generator 12 supply electrical power to a switching type power converter 40 within the welder. Example switching type power converters include DC choppers, inverters, and the like. AC power from the generator is rectified by a rectifier 42 within the power converter 40. The DC output from the rectifier 42 supplies the welder's DC bus 43. The DC bus 43, in turn, supplies electrical power to a switching circuit, such as chopper or inverter 44.

Electrical leads 46, 48 from the chopper/inverter 44 provide a completed circuit for the arc welding current. The arc welding current flows from the chopper/inverter 44 through the electrode 20, across the arc 18, and through the workpiece 22. The welding electrode 20 and workpiece 22 are operatively connected to the switching type power converter 40 via the electrical leads 46, 48. The welding electrode 20 receives electrical energy from the switching type power converter 40 (as supplied by the engine-generator) for producing the arc 18.

The controller 32 is operatively connected to the switching type power converter 40 to provide control Signals to the switching type power converter to control the welding waveform. The controller 32 can monitor various aspects of the welding process via feedback signals (e.g., welding current/voltage) and adjust welding parameters during arc welding accordingly.

The controller 32 is also operatively connected to a variable-frequency auxiliary power supply 50 for supplying electrical energy to the auxiliary load 28 through the auxiliary power output 24. The controller 32 controls the output frequency and/or voltage level of the variable-frequency auxiliary power supply 50 as discussed above. The generator 12 supplies electrical power to both the variable-frequency auxiliary power supply 50 and the switching type power converter 40. However, the variable-frequency auxiliary power supply 50 is effectively electrically isolated from the chopper/inverter 44 and the arc welding current. The variable-frequency auxiliary power supply 50 can include a rectifier 52 and an inverter 54 for generating a desired AC output voltage and frequency from the power output of the generator 12. The generator 12 can be configured to supply 3-phase electrical power to the variable-frequency auxiliary power supply 50 as shown in Fig. 2, or single phase electrical power if desired.

The output of the variable-frequency auxiliary power supply 50 can be adjusted manually or automatically as discussed above to meet the requirements of the auxiliary load that is to be powered from the variable-frequency auxiliary power supply. Moreover, the output voltage frequency of the variable-frequency auxiliary power supply 50 is independent from the speed (RPM) of the engine 14. The frequency of the electrical power supplied by the generator 12 is dependent upon the rotational speed of the engine 14. However and according to the present invention, due to the inverter 54 generating the output voltage of the variable-frequency auxiliary power supply 50 from the rectified generator output, the output voltage frequency that is supplied to the auxiliary load 28 can be different from the frequency of the electrical power supplied by the generator. Fluctuations in the speed of the engine 14, e.g., under varying load conditions, will not affect the output voltage frequency of the variable-frequency auxiliary power supply 50.

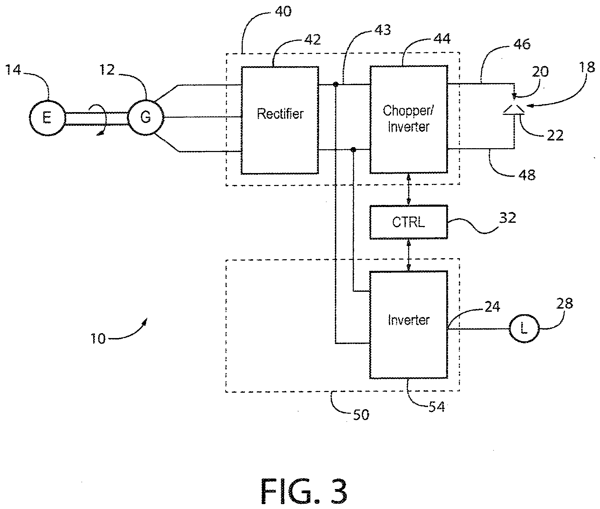

Figure 3 provides another schematic diagram of an example arc welding system 10. In Fig. 3, the variable-frequency auxiliary power supply includes an inverter 54, but no rectifier. The inverter 54 is powered by the welder's DC bus 43. Thus, the DC bus 43 and the rectifier 42 are sized appropriately to simultaneously supply electrical energy to both the chopper/inverter 44 in the switching type power converter 40 and the inverter 54 in the variable-frequency auxiliary power supply 50.

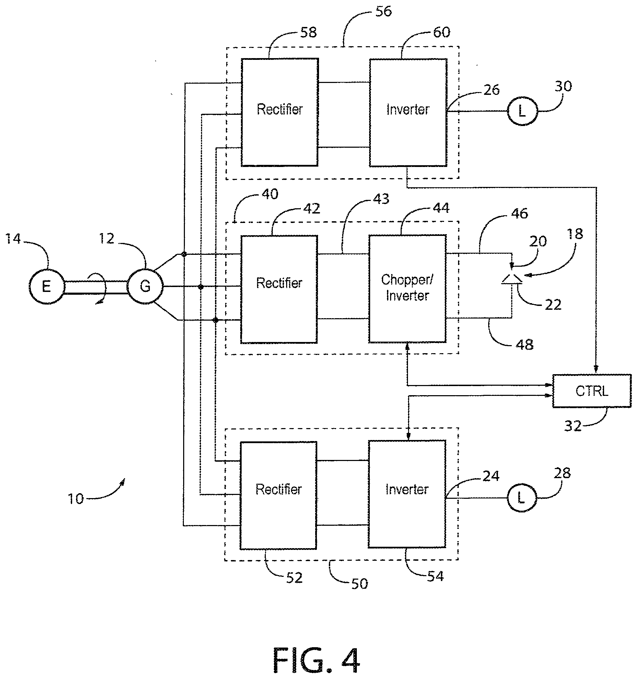

Figure 4 provides still another schematic diagram of an example arc welding system 10. The system shown in Fig. 4 is similar to that in Fig. 2, with the addition of a second variable-frequency auxiliary power supply 56. The second variable-frequency auxiliary power supply 56 includes a rectifier 58 and inverter 60 separate from the first variable-frequency auxiliary power supply 50. The second variable-frequency auxiliary power supply 56 supplies electrical energy to a second auxiliary load 30 through a second auxiliary power output 26. The output voltage and the frequency of the power supplied by the second variable-frequency auxiliary power supply 56 can be set independent from the first variable-frequency auxiliary power supply 50. Thus, the welder can simultaneously supply different voltages and/or frequencies for different auxiliary loads. For example, the first variable-frequency auxiliary power supply 50 could be set to provide power at 120V, 60 Hz (or 220, 50 Hz) and the second variable-frequency auxiliary power supply could be set to provide power at a different voltage/frequency (e.g., 120V, 400 Hz). The auxiliary power outputs 24, 26 are electrically isolated from each other and from the welding current. The frequency and/or voltage provided by the first and second variable-frequency auxiliary power supplies 50, 56 can be determined automatically via the current position Information from the position signal receiver 38 (Fig. 1), or manually via the user interface 36. Like the first variable-frequency auxiliary power supply 50, the output frequency of the second variable-frequency auxiliary power supply 56 is independent from the speed (RPM) of the engine 14.

If desired, the inverter 60 in the second variable-frequency auxiliary power supply 56 could be powered directly from the welder's DC bus 43.

An arc welding system with two auxiliary power outputs and variable-frequency auxiliary power supplies are shown in the figures. However, the arc welding system can include additional auxiliary power outputs and variable-frequency auxiliary power supplies if desired.

It should be evident that this disclosure is by way of example and that various changes may be made by adding, modifying or eliminating details without departing from the scope of the present invention. The invention is therefore not limited to particular details of this disclosure except to the scope of the present invention as defined in the appended claims.

**Reference numbers**

| | | | |
|---|---|---|---|
| 10 | system | 40 | power converter |
| 12 | generator | 42 | rectifier |
| 14 | engine | 43 | DC bus |
| 16 | welder / power supply | 44 | shopper/inverter |
| 18 | electric arc | 46 | electrical lead |
| 20 | welding electrode | 48 | electrical lead |
| 22 | workpiece | 50 | auxiliary power supply |
| 24 | auxiliary power output | 52 | rectifier |
| 26 | auxiliary power output | 54 | inverter |
| 28 | auxiliary load | 56 | auxiliary power supply |
| 30 | auxiliary load | 58 | rectifier |
| 32 | controller | 60 | inverter |
| 34 | memory portion | | |
| 36 | user interface | | |
| 38 | signal receiver | | |

## Claims

1. An arc welding system (10), comprising:
a welding power supply comprising a switching type power converter (40);
a welding electrode (20) operatively connected to the switching type power converter (40) to receive electrical energy from the switching type power converter (40) and produce an electric arc from the arc welding system (10); **characterized in**
a first variable-frequency auxiliary power supply (50) for supplying electrical energy to an auxiliary load through an auxiliary power output of the arc welding system (10), the first auxiliary power supply (50) comprising an inverter (54);
an engine-generator (14) operatively connected to the welding power supply and the first variable-frequency auxiliary power supply (50), to supply electrical energy to the welding power supply to produce the electric arc, and to supply further electrical energy to the inverter (54) of the first variable-frequency auxiliary power supply (50); and
a controller (32) operatively connected to the first variable-frequency auxiliary power supply (50) and configured to control an output voltage frequency of the first variable-frequency auxiliary power supply (50) according to an auxiliary power supply frequency setting,
wherein the output voltage frequency of the first variable-frequency auxiliary power supply is independent from an engine speed of the engine-generator (14).

2. The arc welding system (10) of claim 1, **characterized in** further comprising a position signal receiver (38) operatively connected to the controller (32), and configured to receive a position signal and generate current position information based on the position signal, wherein the controller (32) automatically determines the first auxiliary power supply frequency setting and output voltage level based on the current position information.

3. The arc welding system (10) of claim 1 or 2, **characterized in** the first variable-frequency auxiliary power supply (50) having a first variable-frequency auxiliary power supply, and the arc welding system (10) further comprising a second variable-frequency auxiliary power supply (56) with an inverter (60) for supplying electrical energy to a further auxiliary load through a second auxiliary power output of the arc welding system (10), wherein an output voltage frequency of the second variable-frequency auxiliary power supply (56) is independent from both of the engine speed of the engine-generator (14) and the output voltage frequency of the first variable-frequency auxiliary power supply (50).

4. The arc welding system (10) of claim 3, **characterized in** further comprising a user interface (36) operatively connected to the controller (32), and configured to receive both of the auxiliary power supply frequency setting for the first variable-frequency auxiliary power supply (50), and a higher frequency setting for the second variable-frequency auxiliary power supply (56).

5. The arc welding system (10) of any of the claims 1 to 4, **characterized in that** a frequency of the output voltage from the generator (14) is different from the output voltage frequency of the variable-frequency auxiliary power supply (50, 56).

6. An arc welding system (10), according to any of the claims 1 to 5, wherein a second variable-frequency auxiliary power supply with an inverter (60) for supplying electrical energy to a second auxiliary load through a second auxiliary power output of the arc welding system (10);
wherein the engine-generator (14) is operatively connected to the welding power supply, the first variable-frequency auxiliary power supply (50), and the second variable-frequency auxiliary power supply (56), to supply electrical energy to the welding power supply to produce the electric arc, and to supply further electrical energy to the inverter (54, 60) of each of the first and second variable-frequency auxiliary power supplies (50, 56);
wherein the controller (32) operatively connected to the first and second variable-frequency auxiliary power supplies (50, 56) and is configured to control a first output voltage frequency of the first variable-frequency auxiliary power upply (50) according to a first auxiliary power supply frequency setting, and to control a second output voltage frequency of the second variable-frequency auxiliary power supply (60) according to a second auxiliary power supply frequency setting; and a position signal receiver is provided, which is operatively connected to the controller (32), and is configured to receive a position signal and generate current position information based on the position signal, wherein the controller (32) automatically determines the first auxiliary power supply frequency setting and an output voltage level of the first variable-frequency auxiliary power supply based on the current position information, wherein the first and second output voltage frequencies are independent from an engine speed of the engine-generator (14).

7. The arc welding system (10) of any of the claims 1 to 6, **characterized in that** a frequency of the output voltage from the generator (14) is different from both of the first output voltage frequency of the first variable-frequency auxiliary power supply (50) and the second output voltage frequency of the second variable-frequency auxiliary power supply (56).

8. The arc welding system (10) of any of the claims 1 to 8, **characterized in** the position signal receiver is a global navigation satellite system (GNSS) receiver.

9. An arc welding system (10), according to any of the claims 1 to 5, **characterized in** a global navigation satellite system (GNSS) receiver operatively connected to the controller (32), and configured to receive GNSS Signals and generate current position Information based on the GNSS Signals, wherein the controller (32) automatically determines the auxiliary power supply frequency setting and output voltage level based on the current position information.

10. The arc welding system (10) of any of the claims 1 to 9, further comprising a user interface (36) operatively connected to the controller (32), and configured to manually receive the auxiliary power supply frequency setting.

11. The arc welding system (10) of any of the claims 1 to 10, wherein frequency selections for the auxiliary power supply frequency setting available from the user interface (36) include each of 50 Hz, 60 Hz and 400 Hz.

12. The arc welding system (10) of any of the claims 1 to 11, wherein a frequency of an output voltage from the generator (14) is different from the output voltage frequency of the variable-frequency auxiliary power supply (50).

## Patentansprüche

1. Lichtbogenschweißsystem (10), umfassend:
eine Schweißstromquelle, umfassend einen Leistungswandler vom Schalttyp (40);
eine Schweißelektrode (20), wirkverbunden mit dem Leistungswandler vom Schalttyp (40), um elektrische Energie von dem Leistungswandler vom Schalttyp (40) zu empfangen und einen elektrischen Lichtbogen von dem Lichtbogenschweißsystem (10) zu erzeugen; **gekennzeichnet durch** eine erste Hilfsstromquelle mit variabler Frequenz (50) zum Versorgen einer Hilfslast mit elektrischer Energie über einen Hilfsstromausgang des Lichtbogenschweißsystems (10), wobei die erste Hilfsstromquelle (50) einen Wechselrichter (54) umfasst;
einen Motorgenerator (14), wirkverbunden mit der Schweißstromquelle und der ersten Hilfsstromquelle mit variabler Frequenz (50), um die Schweißstromquelle mit elektrischer Energie zu versorgen, um den elektrischen Lichtbogen zu erzeugen, und um des Weiteren den Wechselrichter (54) der ersten Hilfsstromquelle mit variabler Frequenz (50) mit elektrischer Energie zu versorgen; und
einen Regler (32), wirkverbunden mit der ersten Hilfsstromquelle mit variabler Frequenz (50), der ausgelegt ist, um eine Ausgangsspannungsfrequenz der ersten Hilfsstromquelle mit variabler Frequenz (50) gemäß einer Hilfsstromquellenfrequenzeinstellung zu regeln,
wobei die Ausgangsspannungsfrequenz der ersten Hilfsstromquelle mit variabler Frequenz von der Motorgeschwindigkeit des Motorgenerators (14) unabhängig ist.

2. Lichtbogenschweißsystem (10) nach Anspruch 1, **dadurch gekennzeichnet, dass** es des Weiteren einen Positionssignalempfänger (38) umfasst, der mit dem Regler (32) wirkverbunden ist und ausgelegt ist, um ein Positionssignal zu empfangen und basierend auf dem Positionssignal eine Information über die aktuelle Position zu erzeugen, wobei der Regler (32) automatisch die erste Hilfsstromquellenfrequenzeinstellung und das Ausgangsspannungsniveau basierend auf der Information über die aktuelle Position bestimmt.

3. Lichtbogenschweißsystem (10) nach Anspruch 1 oder 2, **dadurch gekennzeichnet, dass** die erste Hilfsstromquelle mit variabler Frequenz (50) eine erste Hilfsstromquelle mit variabler Frequenz aufweist und dass das Lichtbogenschweißsystem (10) des Weiteren eine zweite Hilfsstromquelle mit variabler Frequenz (56) mit einem Wechselrichter (60) umfasst, um eine weitere Hilfslast über einen zweiten Hilfsstromausgang des Lichtbogenschweißsystems (10) mit elektrischer Energie zu versorgen, wobei eine Ausgangsspannungsfrequenz der zweiten Hilfsstromversorgung mit variabler Frequenz (56) sowohl von der Motorgeschwindigkeit des Motorgenerators (14) als auch von der Ausgangsspannungsfrequenz der ersten Hilfsstromversorgung mit variabler Frequenz (50) unabhängig ist.

4. Lichtbogenschweißsystem (10) nach Anspruch 3, **dadurch gekennzeichnet, dass** es des Weiteren eine Nutzerschnittstelle (36) umfasst, die mit dem Regler (32) wirkverbunden ist und ausgelegt ist, um sowohl die Hilfsstromquellenfrequenzeinstellung für die erste Hilfsstromquelle mit variabler Frequenz (50) als auch eine höhere Frequenzeinstellung für die zweite Hilfsstromquelle mit variabler Frequenz (56) zu empfangen.

5. Lichtbogenschweißsystem (10) nach einem der Ansprüche 1 bis 4, **dadurch gekennzeichnet, dass** sich eine Frequenz der Ausgangsspannung aus dem Generator (14) von der Ausgangsspannungsfrequenz der Hilfsstromquelle mit variabler Frequenz (50, 56) unterscheidet.

6. Lichtbogenschweißsystem (10) nach einem der Ansprüche 1 bis 5, wobei eine zweite Hilfsstromquelle mit variabler Frequenz und mit einem Wechselrichter (60) zur Versorgung einer zweiten Hilfslast über einen zweiten Hilfsstromausgang des Lichtbogensystems (10) mit elektrischer Energie;
wobei der Motorgenerator (14) mit der Schweißstromquelle, der ersten Hilfsstromquelle mit variabler Frequenz (50) und der zweiten Hilfsstromquelle mit variabler Frequenz (56) wirkverbunden ist, um die Schweißstromquelle mit elektrischer Energie zu versorgen, um den elektrischen Lichtbogen zu erzeugen, und um des Weiteren die Wechselrichter (54, 60) der ersten bzw. der zweiten Hilfsstromquelle mit variabler Frequenz (50, 56) mit elektrischer Energie zu versorgen;
wobei der Regler (32) mit der ersten und zweiten Hilfsstromquelle mit variabler Frequenz (50, 56) wirkverbunden ist und ausgelegt ist, um eine erste Ausgangsspannungsfrequenz der ersten Hilfsstromquelle mit variabler Frequenz (50) gemäß einer ersten Hilfsstromquellenfrequenzeinstellung zu regeln und um eine zweite Ausgangsspannungsfrequenz der zweiten Hilfsstromquelle mit variabler Frequenz (60) gemäß einer zweiten Hilfsstromquellenfrequenzeinstellung zu regeln;
und wobei ein Positionssignalempfänger bereitgestellt wird, der mit dem Regler (32) wirkverbunden ist und ausgelegt ist, um ein Positionssignal zu empfangen und basierend auf dem Positionssignal eine Information über die aktuelle Position zu erzeugen, wobei der Regler (32) automatisch die erste Hilfsstromquellenfrequenzeinstellung und das Ausgangsspannungsniveau der ersten Hilfsstromquelle mit variabler Frequenz basierend auf der Information über die aktuelle Position bestimmt, wobei die erste und zweite Ausgangsspannungsfrequenz jeweils von der Motorgeschwindigkeit des Motorgenerators (14) unabhängig sind.

7. Lichtbogenschweißsystem (10) nach einem der Ansprüche 1 bis 6, **dadurch gekennzeichnet, dass** sich eine Frequenz der Ausgangsspannung aus dem Generator (14) sowohl von der ersten Ausgangsspannungsfrequenz der ersten Hilfsstromquelle mit variabler Frequenz (50) als auch von der zweiten Ausgangsspannungsfrequenz der zweiten Hilfsstromquelle mit variabler Frequenz (56) unterscheidet.

8. Lichtbogenschweißsystem (10) nach einem der Ansprüche 1 bis 8, **dadurch gekennzeichnet, dass** der Positionssignalempfänger ein Empfänger für ein globales Navigationssatellitensystem (GNSS) ist.

9. Lichtbogenschweißsystem (10) nach einem der Ansprüche 1 bis 5, **dadurch gekennzeichnet, dass** ein Empfänger für ein globales Navigationssatellitensystem (GNSS) mit dem Regler (32) wirkverbunden ist und ausgelegt ist, um GNSS-Signale zu empfangen und basierend auf den GNSS-Signalen eine Information über die aktuelle Position zu erzeugen, wobei der Regler (32) automatisch die Hilfsstromquellenfrequenzeinstellung und das Ausgangsspannungsniveau basierend auf der Information über die aktuelle Position bestimmt.

10. Lichtbogenschweißsystem (10) nach einem der Ansprüche 1 bis 9, des Weiteren umfassend eine Nutzerschnittstelle (36), die mit dem Regler (32) wirkverbunden ist und ausgelegt ist, um die Hilfsstromquellenfrequenzeinstellung manuell zu empfangen.

11. Lichtbogenschweißsystem (10) nach einem der Ansprüche 1 bis 10, wobei die Frequenzauswahl für die Hilfsstromquellenfrequenzeinstellung, die von der Nutzerschnittstelle (36) verfügbar ist, jeweils 50 Hz, 60 Hz und 400 Hz einschließt.

12. Lichtbogenschweißsystem (10) nach einem der Ansprüche 1 bis 11, wobei sich eine Frequenz einer Ausgangsspannung aus dem Generator (14) von der Ausgangsspannungsfrequenz der Hilfsstromquelle mit variabler Frequenz (50) unterscheidet.

## Revendications

1. Un système de soudure à l'arc (10) comprenant :
une source de courant pour soudure comprenant un convertisseur de puissance à commutation (40) ;
une électrode de soudure (20) connectée fonctionnellement au convertisseur de puissance à commutation (40) afin de recevoir de l'énergie électrique du convertisseur de puissance à commutation (40) et de produire un arc électrique à partir du système de soudure à l'arc (10) ; **se caractérisant par** une première source de courant auxiliaire à fréquence variable (50) alimentant une charge auxiliaire en énergie électrique via une sortie de courant auxiliaire du système de soudure à l'arc (10), sachant que la première source de courant auxiliaire (50) comprend un onduleur (54) ;
un moteur-générateur (14) connecté fonctionnellement à la source de courant pour soudure et à la première source de courant auxiliaire à fréquence variable (50), afin d'alimenter la source de courant pour soudure en énergie électrique, afin de générer l'arc électrique et afin en outre de fournir de l'énergie électrique à l'onduleur (54) de la première source de courant auxiliaire à fréquence variable (50) ; et
un régulateur (32) connecté fonctionnellement à la première source de courant auxiliaire à fréquence variable (50), configuré pour réguler une fréquence de tension de sortie de la première source de courant auxiliaire à fréquence variable (50) conformément à un réglage de la fréquence de la source de courant auxiliaire, sachant que la fréquence de tension de sortie de la première source de courant auxiliaire à fréquence variable ne dépend pas de la vitesse du moteur du moteur-générateur (14).

2. Un système de soudure à l'arc (10) selon la revendication 1 **se caractérisant en outre par** un récepteur de signaux de position (38) connecté fonctionnellement au régulateur (32) et configuré de manière à recevoir un signal de position et à générer une information sur la position actuelle sur la base du signal de position, sachant que le régulateur (32) détermine automatiquement le premier réglage de la fréquence de la source de courant auxiliaire et le niveau de la tension de sortie sur la base de l'information relative à la position actuelle.

3. Un système de soudure à l'arc (10) selon la revendication 1 ou 2, **se caractérisant par le fait que** la première source de courant auxiliaire à fréquence variable (50) présente une première source de courant auxiliaire à fréquence variable et que le système de soudure à l'arc (10) comprend en outre une deuxième source de courant auxiliaire à fréquence variable (56) avec un onduleur (60) pour alimenter en énergie électrique une autre charge auxiliaire via une deuxième sortie de courant auxiliaire du système de soudure à l'arc (10), sachant qu'une fréquence de la tension de sortie de la deuxième source de courant auxiliaire à fréquence variable (56) ne dépend ni de la vitesse du moteur du moteur générateur (14) ni de la fréquence de la tension de sortie de la première source de courant auxiliaire à fréquence variable (50).

4. Un système de soudure à l'arc (10) selon la revendication 3, **se caractérisant en outre par** une interface utilisateur (36) connectée fonctionnellement au régulateur (32) et configurée de manière à recevoir aussi bien le réglage de la fréquence de la source de courant auxiliaire pour la première source de courant auxiliaire à fréquence variable (50) qu'un réglage plus élevé de la fréquence pour la deuxième source de courant auxiliaire à fréquence variable (56).

5. Un système de soudure à l'arc (10) selon une des revendications 1 à 4, **se caractérisant par le fait qu'**une fréquence de tension de sortie issue du générateur (14) diffère de la fréquence de tension de sortie de la source de courant auxiliaire à fréquence variable (50, 56).

6. Un système de soudure à l'arc (10) selon une des revendications 1 à 5, sachant qu'une deuxième source de courant auxiliaire à fréquence variable avec un onduleur (60) alimente en énergie électrique une deuxième charge auxiliaire via une deuxième sortie de courant auxiliaire du système de soudure à l'arc (10) ;
sachant que le moteur-générateur (14) est connecté fonctionnellement à la source de courant pour soudure, à la première source de courant auxiliaire à fréquence variable (50) et à la deuxième source de courant auxiliaire à fréquence variable (56) afin d'alimenter en énergie électrique la source de courant pour soudure pour générer l'arc électrique et pour en outre alimenter en énergie électrique les onduleurs (54, 60) de la première et de la deuxième source de courant auxiliaire à fréquence variable (50, 56) ;
sachant que le régulateur (32) est connecté fonctionnellement à la première et la deuxième source de courant auxiliaire à fréquence variable (50, 56) et configuré de manière à réguler une première fréquence de la tension de sortie de la première source de courant auxiliaire à fréquence variable (50) selon un premier réglage de la fréquence de la source de courant auxiliaire et à réguler une deuxième fréquence de la tension de sortie de la deuxième source de courant auxiliaire à fréquence variable (60) selon un deuxième réglage de la fréquence de la source de courant auxiliaire;
et sachant qu'un récepteur de signal de position, connecté fonctionnellement au régulateur (32) est mis à disposition et conçu de manière à recevoir un signal de position et, à générer une information sur la position actuelle sur la base du signal de position, sachant que le régulateur (32) détermine automatiquement le premier réglage de la fréquence de la source de courant auxiliaire et le niveau de la tension de sortie de la première source de courant auxiliaire à fréquence variable sur la base de l'information relative à la position actuelle, sachant que la première et la deuxième fréquence de la tension de sortie ne dépendent pas de la vitesse du moteur du moteur-générateur (14).

7. Un système de soudure à l'arc (10) selon une des revendications 1 à 6, **se caractérisant par le fait qu'**une fréquence de la tension de sortie issue du générateur (14) diffère aussi bien de la première fréquence de la tension de sortie de la première source de courant auxiliaire à fréquence variable (50) que de la deuxième fréquence de la tension de sortie de la deuxième source de courant auxiliaire à fréquence variable (56).

8. Un système de soudure à l'arc (10) selon une des revendications 1 à 8, **se caractérisant par le fait que** le récepteur de signal de position correspond à un récepteur pour système mondial de navigation par satellite (GNSS).

9. Un système de soudure à l'arc (10) selon une des revendications 1 à 5, **se caractérisant par le fait qu'**un récepteur pour système mondial de navigation par satellite (GNSS) est connecté fonctionnellement au régulateur (32) et est conçu de manière à recevoir des signaux GNSS et, sur la base des signaux GNSS, à générer une information sur la position actuelle, sachant que le régulateur (32) détermine automatiquement le réglage de la fréquence de la source de courant auxiliaire et le niveau de la tension de sortie sur la base de l'information relative à la position actuelle.

10. Un système de soudure à l'arc (10) selon une des revendications 1 à 9, comprenant en outre une interface utilisateur (36) connectée fonctionnellement au régulateur (32) et conçue de manière à recevoir manuellement le réglage de la fréquence de la source de courant auxiliaire.

11. Un système de soudure à l'arc (10) selon une des revendications 1 à 10, sachant que le choix de la fréquence pour le réglage de la fréquence de la source de courant auxiliaire disponible à partir de l'interface utilisateur (36), intègre 50 Hz, 60 Hz et 400 Hz.

12. Un système de soudure à l'arc (10) selon une des revendications 1 à 11, sachant qu'une fréquence d'une tension de sortie issue du générateur (14) diffère de la fréquence de la tension de sortie de la source de courant auxiliaire à fréquence variable (50).
